Europäisches Patentamt

European Patent Office

Office européen des brevets

(19)

(11) Numéro de publication: **0 175 597**
**B1**

(12) **FASCICULE DE BREVET EUROPEEN**

(45) Date de publication du fascicule du brevet:
**01.03.89**

(51) Int. Cl.⁴: **F 16 L 17/00,** F 16 L 27/08

(21) Numéro de dépôt: **85401409.9**

(22) Date de dépôt: **11.07.85**

(54) Méthode et dispositif de maintien de l'étanchéite entre pièces pouvant se déplacer l'une par rapport à l'autre.

(30) Priorité: **24.07.84 FR 8411838**

(43) Date de publication de la demande:
**26.03.86 Bulletin 86/13**

(45) Mention de la délivrance du brevet:
**01.03.89 Bulletin 89/9**

(84) Etats contractants désignés:
**DE FR GB IT NL SE**

(56) Documents cités:
**US-A- 2 253 932**
**US-A- 3 689 082**
**US-A- 3 944 263**

(73) Titulaire: **TECHNIP-GEOPRODUCTION, Tour TECHNIP 170, Place Henri Regnault, F-92090 Paris La Defense (FR)**

(72) Inventeur: **Delamare, Guy Robert, Les Iris 50 Quai du Génie, F-95220 Herblay (FR)**

(74) Mandataire: **Aubel, Pierre et al, Institut Français du Pétrole Département Brevets 4, avenue de Bois Préau, F-92502 Rueil-Malmaison (FR)**

EP 0 175 597 B1

## Description

La présente invention concerne une méthode et un dispositif de maintien de l'étanchéité entre deux tuyauteries coaxiales de transfert de fluide à très haute pression, tournant l'une par rapport à l'autre autour de leur axe commun.

Un tel dispositif permet par exemple le transfert d'un fluide sous pression entre deux organes d'une machine tournant l'un par rapport à l'autre. Il est plus particulièrement adapté à assurer cette fonction lorsque les mouvements de rotation entre les deux organes sont lents, et le plus souvent alternatifs et de faible amplitude, la pression du fluide très élevée, et la durée de fonctionnement requise très longue.

On connaît déjà des dispositifs de maintien de l'étanchéité entre deux tuyauteries coaxiales tournant l'une par rapport à l'autre, appelés généralement joints tournants, qui utilisent des garnitures d'étanchéité en matériaux élastiques associés à des surfaces d'appui cylindriques ou plates et annulaires, appelés portées, contre lesquelles elles sont appliquées, notamment par la pression du fluide lui-même. La rotation d'une des deux tuyauteries coaxiales par rapport à l'autre ne peut être obtenue que par le glissement de la garniture sur sa portée.

Lorsque la pression du fluide à transférer est très élevée, ces garnitures sont très fortement pressées contre leur portée et le glissement provoque une usure rapide de celles-ci. Au cours du glissement, lorsque la pression du fluide est très élevée, on constate également que les lèvres de la garniture subissent un effort de cisaillement intense. Les matériaux actuellement connus pour réaliser ces garnitures, et qui présentent la souplesse nécessaire pour épouser parfaitement la surface des portées avec lesquelles elles coopèrent pour réaliser l'étanchéité, généralement ne possèdent pas une résistance suffisante au cisaillement, et les lèvres peuvent ainsi être détruites par arrachement, surtout au moment de l'inversion du sens de rotation.

C'est pourquoi la présente invention propose un dispositif où les organes entrant en contact pour assurer l'étanchéité ne sont animés d'aucun mouvement rotatif relatif et peuvent être sans dommages pressés l'un contre l'autre, aussi fortement qu'il est nécessaire, pour constituer une barrière efficace, quelle que soit la pression du fluide à confiner.

L'art antérieur peut être illustré par les brevets américains US-A 3 944 263, US-A 2 253 932 et US-A 3 689 082, et les brevets Français FR-A 2 227 784, FR-A 1 572 520, FR-A 1 585 213 et FR-A 1 310 665 qui concernent des joints statiques ou tournants.

L'objet principal de l'invention est de réaliser un nouveau dispositif de maintien de l'étanchéité entre deux tuyauteries coaxiales, tournant l'une par rapport à l'autre, capable de confiner un fluide à très haute pression et dont la robustesse et la résistance à l'usure permettent, sans détérioration, un fonctionnement de très longue durée.

La présente invention peut être avantageusement utilisée pour remplacer les joints tournants antérieurs employés sur les dispositifs de transfert d'un fluide, par exemple entre une installation marine et un navire tel un pétrolier, notamment, lorsque ces deux structures sont reliées entre elles par un bras et qu'elles sont libres de tourner l'une par rapport à l'autre.

La présente invention propose un dispositif de maintien de l'étanchéité entre deux pièces pouvant se déplacer l'une par rapport à l'autre. Il se caractérise en ce qu'il comporte aux moins deux ensembles ou organes dits d'étanchéité indépendants, chacun de ces ensembles d'étanchéité ayant au moins deux états possibles, un premier état pour lequel il assure l'étanchéité entre lesdites pièces, et un deuxième état pour lequel il n'assure pas l'étanchéité. Chacun de ces ensembles d'étanchéité est déformable.

Le dispositif selon l'invention comporte des moyens de commande actionnant par intermittence chacun de ces ensembles d'étanchéité.

La méthode de mise en œuvre de ce dispositif se caractérise en ce que chacun de ces ensembles d'étanchéité fonctionne par intermittence et en ce qu'en permanence au moins l'un de ces ensembles d'étanchéité est dans le premier état, bien entendu, ce n'est pas toujours le même.

Les deux pièces pour lesquelles il faut assurer l'étanchéité peuvent être des tuyauteries tournant l'une par rapport à l'autre autour d'un même axe.

Au moins l'un des ensembles d'étanchéité pourra comporter un manchon élastiquement déformable en torsion selon son axe, relié de façon étanche par l'une de ses extrémités à l'une des tuyauteries précitées, et porte à son autre extrémité une bride équipée de moyens de connexion temporaire sur l'autre tuyauterie précitée.

Selon une première variante de l'invention, le manchon élastiquement déformable en torsion selon son axe peut comprendre au moins une virole rigide reliée, d'une part, sur une partie de sa longueur, avec l'une des deux tuyauteries par l'intermédiaire d'une première virole en matériau élastiquement déformable dont l'une des deux surfaces latérales cylindriques adhère sur ladite tuyauterie et l'autre sur ladite virole rigide, et d'autre part, sur une autre partie de sa longueur, avec la bride équipée de moyens de connexion temporaire par l'intermédiaire d'une seconde virole en matériau élastiquement déformable, dont l'une des deux surfaces latérales cylindriques adhère sur ladite bride et l'autre sur ladite virole rigide.

Selon une sous-variante de cette première variante de l'invention, le manchon élastiquement déformable en torsion selon son axe peut comporter un empilage de rondelles en matériau élastiquement déformable, la rondelle en matériau élastiquement déformable située à l'une des extrémités dudit manchon adhérant avec une bride solidaire de l'une des deux tuyauteries de transfert de fluide sous pression, et la rondelle en matériau élastiquement déformable située à l'autre extrémité dudit manchon adhérant avec la bride équipée de moyens de connexion temporaire sur l'autre tuyauterie de transfert de fluide sous pression.

Selon une autre sous-variante de cette première variante de l'invention, le manchon élastiquement déformable en torsion selon son axe peut être un tube souple en matériau élastiquement déformable, éventuellement renforcé par une armature en fils résistants en traction, et dont l'une des extrémités comporte une bride solidaire de l'une des deux tuyauteries sous pression, et dont l'autre extrémité comporte une autre bride équipée de moyens de connexion temporaire sur l'autre tuyauterie de transfert de fluide sous pression.

Selon une deuxième variante de l'invention, les moyens de connexion temporaire peuvent comporter une bague en matériau élastiquement déformable, disposée autour de la tuyauterie à connecter, dans une gorge ménagée dans ladite bride d'extrémité du manchon élastiquement déformable en torsion, et dont l'une parois latérales est mobile et actionnée pour un vérin hydraulique annulaire. Ladite bague, qui présente une forme différente de sa forme initiale lorsqu'elle est soumise temporairement à un effort de compression selon son axe appliqué par ledit vérin annulaire, restitue cet effort radialement autour de ladite tuyauterie qu'elle enserre fortement pour réaliser simultanément, d'une part, l'étanchéité entre ledit manchon et ladite tuyauterie, et d'autre part, l'entraînement en rotation de ladite bride d'extrémité dudit manchon par ladite tuyauterie de transfert de fluide.

Selon une sous-variante de cette précédente variante de l'invention, les moyens de connexion temporaire peuvent comporter une membrane étanche et élastique solidaire de la bride d'extrémité du manchon élastiquement déformable en torsion, avec laquelle elle délimite une chambre annulaire à géométrie variable concentrique à la tuyauterie de transfert de fluide sous pression, ladite membrane pouvant prendre, selon que ladite chambre qu'elle délimite est alimentée ou non en fluide sous pression, une première position où, gonflée, elle est appliquée fortement contre ladite tuyauterie en réalisant, d'une part, l'étanchéité entre ledit manchon et ladite tuyauterie, et d'autre part, l'entraînement en rotation, par friction, de ladite bride d'extrémité dudit manchon par la tuyauterie précitée, et, une seconde positon où, dégonflée, elle est rappelée par sa propre raideur élastique contre ladite bride dans sa forme initiale de repos, et n'a plus de contact avec la tuyauterie précitée.

Avantageusement, cette membrane étanche et élastique peut être un tube en élastomère, fixé à ses deux extrémités sur la bride d'extrémité du manchon élastiquement déformable, avec laquelle il délimite une chambre annulaire pressurisable, et dont la résistance à la pression et la déformabilité élastique sont assurées par une armature interne en fils tressés, lesdits fils formant entre eux un angle ad hoc, voisin de 20°, de sorte que sous l'action de la pressurisation de ladite chambre, le diamètre dudit tube peut s'accroître par modification de l'angle formé entre eux par lesdits fils tressés, et revenir à sa côte initiale lorsque l'alimentation en fluide sous pression est stoppée, par rappel élastique de l'élastomère emprisonnée entre lesdits fils tressés.

Selon une autre sous variante de la précédente variante de l'invention, les moyens de connexion temporaire peuvent comporter une collerette, solidaire de la tuyauterie de transfert de fluide à connecter et emprisonnée dans une gorge ménagée dans la bride d'extrémité du manchon élastique en torsion, les parois latérales de ladite gorge étant constituées par le corps et le piston d'un vérin hydraulique annulaire. Dans ce cas, l'alimentation en fluide sous pression du cylindre dudit vérin hydraulique produit le rapprochement desdites parois latérales pour pincer très fortement ladite collerette afin de réaliser, d'une part, l'étanchéité entre ledit manchon et ladite tuyauterie, et d'autre part, l'entraînement en rotation, par friction, de ladite bride d'extrémité dudit manchon par la tuyauterie précitée.

Avantageusement, le vérin annulaire actionnant la paroi latérale mobile de la gorge ménagée dans la bride d'extrémité du manchon élastique comporte un corps de vérin et un piston coaxiaux qui sont reliés entre eux, de part et d'autre de la chambre annulaire pressurisable qu'ils confinent, par deux viroles en matériau élastiquement déformable. Les surfaces latérales de ces viroles adhèrent avec ledit corps de vérin et ledit piston, de sorte que le mouvement axial dudit piston dans un sens, sous l'effet de la pression du fluide contenu dans ladite chambre annulaire, est toléré par la déformation en cisaillement du matériau souple desdites viroles, le mouvement en sens inverse pouvant être obtenu, lorsque la mise en pression de ladite chambre annulaire est interrompue, par la raideur élastique du matériau souple desdites viroles qui tend à reprendre sa forme initiale.

Selon une troisième variante de l'invention, la commande qui actionne par intermittence chacun des deux ensembles d'étanchéité entre les deux tuyauteries peut être liée à la rotation de ces deux tuyauteries l'une par rapport à l'autre à l'aide d'une came solidaire de l'une des deux tuyauteries précitées et d'un détecteur de position associé à ladite came et fixé sur l'autre tuyauterie, ledit détecteur déclenchant le fonctionnement des moyens de connexion équipant lesdits ensembles d'étanchéité.

Avantageusement, le détecteur de position peut être un distributeur de fluide à tiroir à trois positions sur lequel on branche quatre tuyauteries, et la came, à laquelle est associé un palpeur de manœuvre de ce tiroir, peut présenter un contour à trois niveaux. Deux desdites tuyauteries relient chacune ledit distributeur à chacun des moyens de connexion temporaire équipant les ensembles d'étanchéité actionnés par intermittence. La troisième tuyauterie relie ledit distributeur à un générateur de fluide sous pression, associé à un accumulateur de pression, et la quatrième tuyauterie relie ledit distributeur à une bâche réceptrice avec mise à l'air libre, dans laquelle bâche le générateur précité puise le fluide qu'il met en pression. Les trois positions dudit distributeur correspondent alors aux séquences de mise en action desdits ensembles d'étanchéité, pendant lesquelles, successivement, un seul des deux ensembles précités est en action, puis les deux, puis le second seulement, etc., chacune de ces séquences correspondant à un des trois niveaux de ladite came.

En variante, pour assurer l'alimentation en fluide sous pression desdits moyens de connexion temporaire, une canalisation peut relier ledit distributeur à tiroir au circuit comportant les deux tuyauteries coaxiales de transfert de fluide tournant l'une par rapport à l'autre, de façon à utiliser directement, pour manœuvrer ces dits moyens de connexion, l'énergie du fluide à confiner.

A cet effet, un multiplicateur de pression comportant un piston étagé, coulissant dans un corps étanche à deux alésages coaxiaux, peut être interposé sur le circuit d'alimentation en fluide sous pression desdits moyens de connexion temporaire.

Les caractéristiques et avantages de l'invention seront mieux compris à la lecture de la description qui va suivre de plusieurs exemples de réalisation et en se référant aux dessins annexés, dans lesquels:

- la fig. 1 est une vue en coupe longitudinale d'un premier mode de réalisation du dispositif de maintien de l'étanchéité selon l'invention, où le manchon élastiquement déformable en torsion comporte des viroles souples, et où les moyens de connexion temporaire comportent une collerette solidaire de la tuyauterie à connecter,
- la fig. 2 est une vue en coupe longitudinale d'un second mode de réalisation du dispositif de maintien de l'étanchéité selon l'invention, où le manchon élastiquement déformable en torsion est un tube souple, et où les moyens de connexion temporaire comportent une bague déformable,
- la fig. 3 est une vue en coupe longitudinale d'un troisième mode de réalisation du dispositif de maintien de l'étanchéité selon l'invention, où le manchon élastiquement déformable comporte une pluralité des rondelles souples, et où les moyens de connexion comportent un joint gonflable et repliable,
- la fig. 4 est une vue en coupe longitudinale d'une variante de joint gonflable expansible, représenté dans sa position initiale sans pression,
- la fig. 5 est une vue en coupe longitudinale du même joint gonflable, représenté dans sa position gonflée et expansée,
- la fig. 6 est une vue schématiquement représentant de façon simplifiée le circuit hydraulique de commande des moyens de connexion,
- la fig. 7 est une vue schématique représentant de façon simplifiée une autre version du circuit de commande des moyens de connexion, et

- la fig. 8 est une vue en coupe transversale du dispositif illustrant particulièrement un mode de réglage de la position du distributeur à tiroir coulissant par rapport à la came.

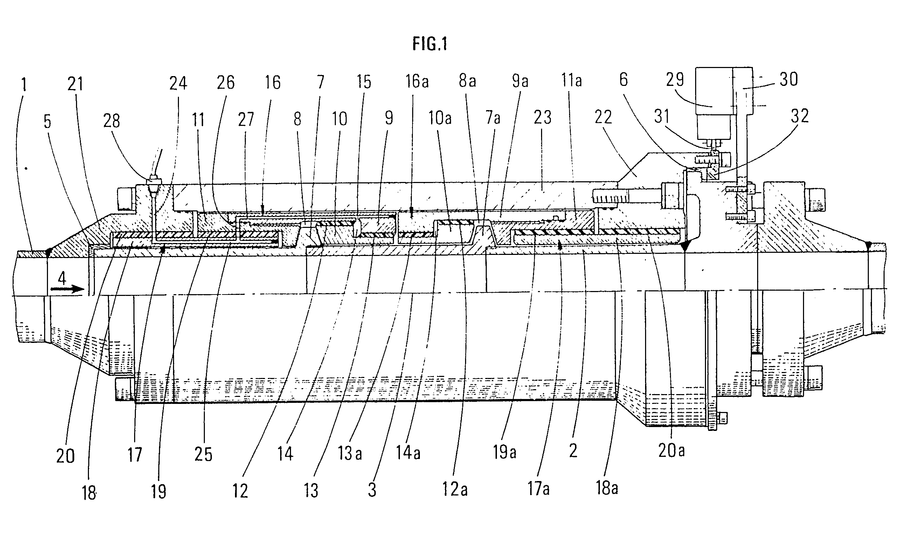

La fig. 1 représente un premier mode de réalisation du dispositif de maintien de l'étanchéité entre deux tuyauteries 1 et 2 coaxiales et tournant l'une par rapport à l'autre autour de leur axe commun 3, le fluide sous pression qu'elles canalisent s'écoulant de l'une vers l'autre par exemple dans le sens de la flèche 4.

Ces deux tuyauteries sont guidées en rotation par les coussinets 5 et 6. La tuyauterie 2 comporte deux collerettes 7 et 7a qui sont emprisonnées dans les gorges 8 et 8a, dont la première résulte de l'assemblage du corps du vérin 9 avec le piston 10 et la bride 11, et la seconde résulte de l'assemblage du corps de vérin 9a, avantageusement identique à 9, avec le piston 10a et la bride 11a, avantageusement identiques respectivement à 10 et 11. Chacun des pistons 10 (ou 10a) est relié au corps de vérin 9 (ou 9a), par l'intermédiaire des viroles en matériau élastiquement déformable 12 et 13 (ou 12a et 13a), pour délimiter la chambre annulaire 14 (ou 14a) qui, comme on le verra plus loin, est reliée, par un orifice tel que 15, au circuit hydraulique qui l'alimente en fluide sous pression.

Le corps de vérin 9a et le piston 10a sont représentés dans leur position relative initiale lorsque la chambre 14a n'est pas alimentée en fluide sous pression. Dans cette position, la collerette 7a de la tuyauterie 2 n'a aucun contact avec les flancs de la gorge 8a matérialisée par la bride 11a et le piston 10a, et la tuyauterie 2 peut tourner librement par rapport à la tuyauterie 1. Par contre, le corps de vérin 9 et le piston 10 sont représentés dans une position où, un fluide sous pression étant admis dans la chambre annulaire 13, celui-ci exerce une poussée interne. Cette poussée a écarté le piston 10 du corps de vérin 9 selon un mouvement de translation dans la direction de l'axe longitudinal 3 qui produit le rétrécissement de la gorge 8. La collerette 7 se trouve alors fortement pressée entre la bride 11 et le piston 10. Chacun des deux ensembles de moyens de connexion temporaire 16 et 16a ainsi décrits, comprenant chacun un corps 9 (ou 9a), un piston 10 (ou 10a), et deux viroles élastiques 12 et 13 (ou 12a et 13a), et qui équipent les brides 11 et 11a, sont reliés à la tuyauterie 1 par l'intermédiaire d'un manchon 17 (ou 17a) élastique en torsion autour de l'axe 3. Ce manchon comporte une virole rigide 18 (ou 18a), adhérant sur une partie de sa longueur avec une virole en matériau élastiquement déformable 19 (ou 19a), et adhérant sur l'autre partie de sa longueur avec une autre virole en matériau élastiquement déformable 20 (ou 20a). Les viroles 19 et 19a adhèrent aussi respectivement sur les brides 11 et 11a, alors que la virole 20 adhère aussi sur la bride 21 prolongeant la tuyauterie 1, et que la virole 20a adhère aussi sur la bride 22 prolongeant la tuyauterie 2 par l'intermédiaire du carter cylindrique 23 et de la bride 21.

Une suite de canalisations 24, 25, 26 et 27 est percée au travers des organes 21, 20, 18, 19, 11 et 9 du manchon élastique 17, et du dispositif de connexion 16, pour mettre en communication l'orifice 15 débouchant dans la chambre annulaire 14 avec la tuyauterie 28 qui est reliée en circuit d'alimentation en fluide sous pression décrit plus loin.

Une autre suite de canalisations non représentées relie également, au travers du manchon élastique 17a et du dispositif de connexion 16a, la chambre annulaire 14a avec le circuit d'alimentation en fluide sous pression décrit plus loin.

Comme on le verra, ce circuit comprend entre autre un distributeur hydraulique à tiroir coulissant (29), qui est solidaire en rotation de la tuyauterie 2, par l'intermédiaire du support 30, et dont le coulissement du tiroir est commandé par le galet 31, qui suit le contour de la came 32 solidaire en rotation de la tuyauterie 1 par l'intermédiaire des brides 22 et 21, et du carter 23.

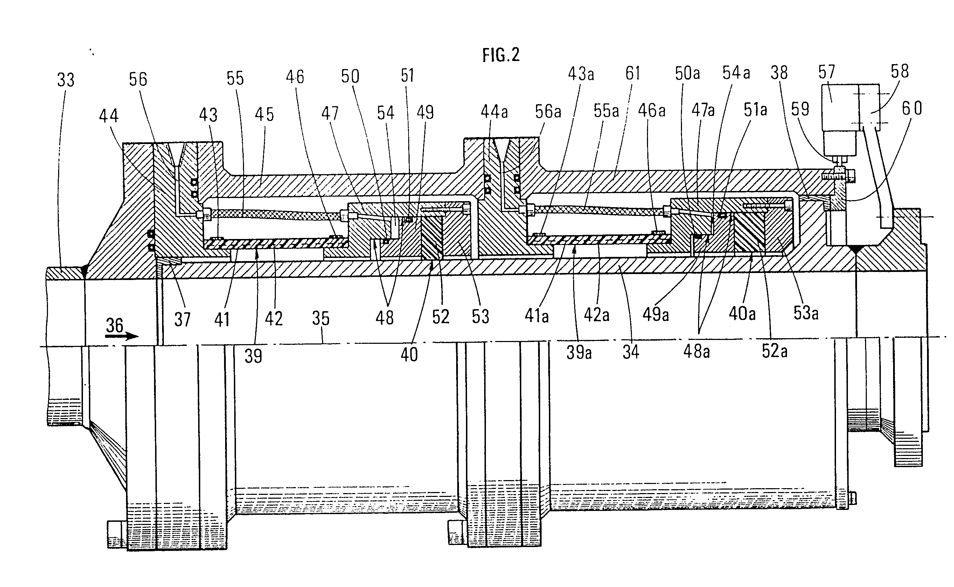

La fig. 2 représente un second mode de réalisation du dispositif de maintien de l'étanchéité selon l'invention entre deux tuyauteries coaxiales 33 et 34, tournant l'une par rapport à l'autre autour de leur axe commun 35, le fluide sous pression qu'elles canalisent s'écoulant de l'une vers l'autre, par exemple dans le sens de la flèche 36.

Ces deux tuyauteries sont guidées en rotation par les coussinets 37 et 38. Le dispositif comprend deux systèmes identiques intégrant chacun un manchon 39 (ou 39a) élastiquement déformable en torsion autour de l'axe 35, associé à un ensemble de moyens de connexion temporaire 40 (ou 40a). Chaque manchon 39 (ou 39a) comprend une tuyauterie souple en matériau élastiquement déformable 41 (ou 41a), renforcée avantageusement par une armature de fils bobinés en hélice 42 (ou 42a) qui lui confère une résistance à la pression du fluide transitant de la tuyauterie 33 vers la tuyauterie 34, qu'elle confine temporairement comme on le verra plus loin. Cette tuyauterie souple 41 (ou 41a) est fixée à l'une de ses extrémités, par exemple à l'aide d'un collier 43 (ou 43a), sur la bride 44 qui est solidaire de la tuyauterie 33 (ou 44a qui est solidaire de la tuyauterie 33 par l'intermédiaire du carter 45 et de la bride 44). Cette même tuyauterie souple 41 (ou 41a) est fixée à son autre extrémité, par exemple à l'aide du collier 46 (ou 46a), sur la bride 47 (ou 47a) supportant l'ensemble des moyens de connexion temporaire 40 (ou 40a).

Cet ensemble 40 (ou 40a) comprend, logé coulissant dans un double alésage 48 (ou 48a) ménagé au sein de la bride 47 (ou 47a), un piston annulaire étagé 49 (ou 49a) équipé des joints d'étanchéité 50 et 51 (ou 50a et 51a) et une bague annulaire en matériau élastiquement déformable 52 (ou 52a) qui se trouve interposée entre ce piston et une bride annulaire 53 (ou 53a) d'obturation de l'alésage 48 (ou 48a). Le piston 49 (ou 49a) délimite avec la bride 47 (ou 47a) une chambre annulaire 54 (ou 54a) à géométrie variable, reliée au circuit d'alimentation en fluide sous pression décrit plus loin par la tuyauterie souple 55 (ou 55a) et la canalisation 56 (ou 56a) percée dans la bride 44 (ou 44a). Comme on le voit sur la fig. 2, les deux systèmes, comportant les manchons 39 et 39a, et les moyens de connexion 40 et 40a qui comprennent les bagues 52 et 52a, sont disposées autour de la tuyauterie 34. Les moyens de connexion 40 sont représentés dans une position où la bague en matériau élastiquement déformable 52, comprimée entre la bride 53 et le piston 49 poussé par la pression du fluide admis dans la chambre annulaire 54, a changé de forme et, se comportant comme un fluide incompressible, transmet radialement la poussée axiale qu'elle reçoit, et enserre fortement la tuyauterie 34. Par contre, les moyens de connexion 40a sont représentés dans la position où l'alimentation en fluide sous pression étant stoppée, la bague 52a a repris, grâce à sa raideur élastique, sa forme initiale en repoussant le piston 49a, et n'est plus en contact avec la tuyauterie 34.

Comme on le verra plus loin, la variante du dispositif décrite fig. 2 comporte également un distributeur à tiroir coulissant 57, qui est solidaire en rotation de la tuyauterie 34 par l'intermédiaire du support 58. Le coulissement du tiroir de ce distributeur est commandé par le galet 59, qui suit le contour de la came 60, solidaire en rotation de la tuyauterie 33 par l'intermédiaire des carter 61 et 45, et des brides 44 et 44a.

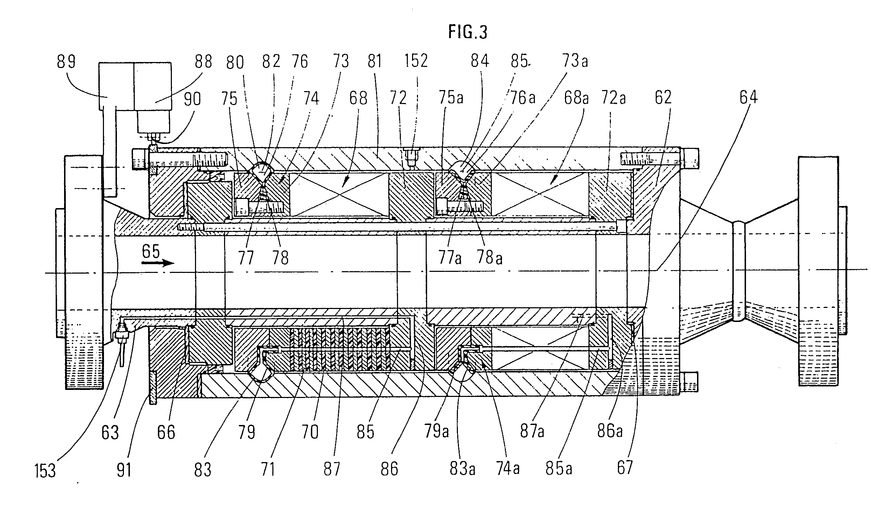

La fig. 3 représente un troisième mode de réalisation du dispositif de maintien de l'étanchéité selon l'invention entre deux tuyauteries coaxiales 62 et 63, tournant l'une par rapport à l'autre autour de leur axe commun 64, le fluide sous pression qu'elles canalisent s'écoulant par exemple dans le sens de la flèche 65. Ces deux tuyauteries sont guidées en rotation par les coussinets 66 et 67. Le dispositif comprend deux systèmes identiques, dont chacun intègre un manchon 68 (ou 68a) élastiquement déformable en torsion autour de l'axe 64, associé à un ensemble de moyens de connexion temporaire 74 (ou 74a). Chaque manchon 68 (ou 68a) est constitué par l'empilage de rondelles en matériau élastiquement déformable, telles que 70, et de rondelles rigides, telles que 71, chacune des rondelles rigides étant placée entre deux rondelles en matériau élastiquement déformable auxquelles elle adhère, par exemple par collage. La rondelle en matériau élastiquement déformable située à l'une des extrémités du manchon 68 (ou 68a) adhère avec une bride 72 (ou 72a) solidaire de la tuyauterie 63, et la rondelle en matériau élastiquement déformable située à l'autre extrémité de ce manchon adhère avec une bride 73 (ou 73a) portant l'ensemble des moyens de connexion 74 (ou 74a). Chaque ensemble 74 (ou 74a) comprend une contre-bride 75 (ou 75a) qui, coopérant avec la bride 73 (ou 73a), délimite une gorge intérieure 76 (ou 76a), et vient presser de façon étanche les talons de fixation 77 et 78 (ou 77a et 78a) du joint gonflable 79 (ou 79a).

La gorge intérieure 76 est associée à une gorge extérieure 80, ménagée dans le carter cylindrique 81 qui prolonge coaxialement la tuyauterie 62, en ceinturant les deux systèmes de connexion temporaire 74 et 74a, de façon à créer un espace annulaire 82, qui enferme totalement la partie mobile 83 du joint gonflable 79. De même, la gorge intérieure 76a est associée à une gorge extérieure 84, ménagée également dans le carter 81, de façon à créer un espace annulaire 85 qui enferme totalement la partie mobile 83a du joint gonflable 79a. Sur cette fig. 3, le joint 79 est représenté dans la position où la chambre interne à géométrie variable qu'il délimite est alimentée en fluide sous pression par l'intermédiaire des canalisations 85, 86, 87 percées dans la bride 73, dans l'empilage des rondelles souples et rigides 70 et 71, dans la bride 72, et dans la paroi de la tuyauterie 63, jusqu'au raccord 153 de liaison avec le circuit de génération de pression décrit plus loin. Dans cette position, la paroi mobile 83 du joint 79 est déployée vers l'extérieur et fortement pressée contre la paroi de la gorge 80. Par contre, le joint 79a, dont la chambre interne est également reliée au circuit de génération de pression décrit plus loin, notamment par les canalisations 85a, 86a et 87a, est représenté dans la position où, l'alimentation en fluide sous pression étant interrompue, celui-ci est rappelé par son élasticité propre dans sa position initiale de construction, replié sur lui-même. Dans cette position, il n'est plus en contact avec la paroi de la gorge 84.

Comme on le verra plus loin, la variante du dispositif décrite fig. 3 comporte également un distributeur à tiroir coulissant 88, qui est solidaire en rotation de la tuyauterie 63 par l'intermédiaire du support 89. Le coulissement du tiroir de ce distributeur est commandé par le galet 90 qui suit le contour de la came 91, solidaire en rotation de la tuyauterie 62 par l'intermédiaire du carter 81.

L'association entre les différents types de manchons torsibles et les différents moyens de connexion, telle que choisie dans les fig. 1, 2 et 3, n'est donnée qu'à titre d'exemple. Il est évident que l'on peut associer, sans sortir du domaine de l'invention, n'importe lequel des trois types de manchons torsibles décrits avec n'importe lequel des trois moyens de connexion décrits.

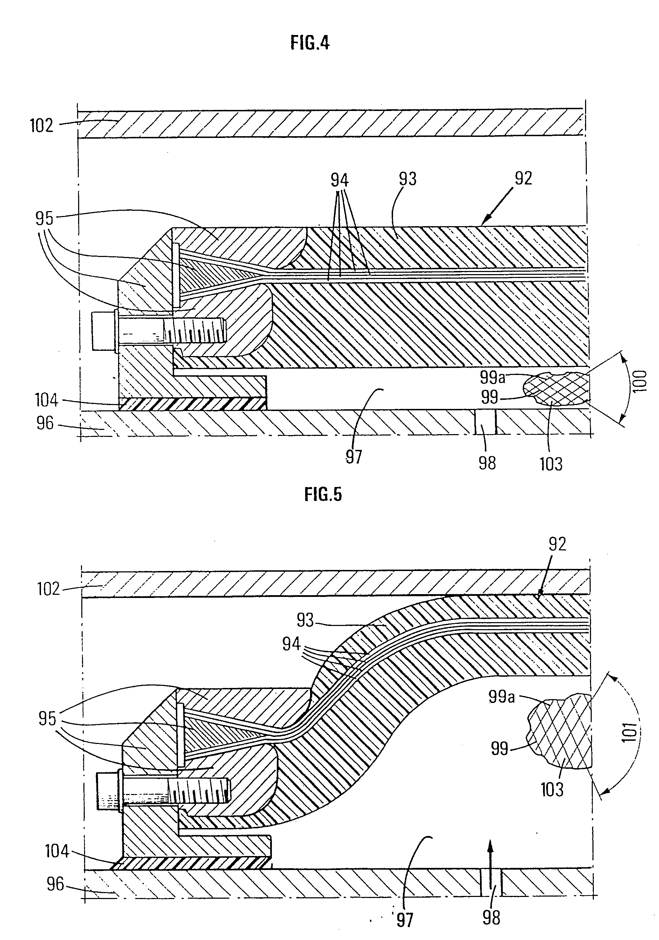

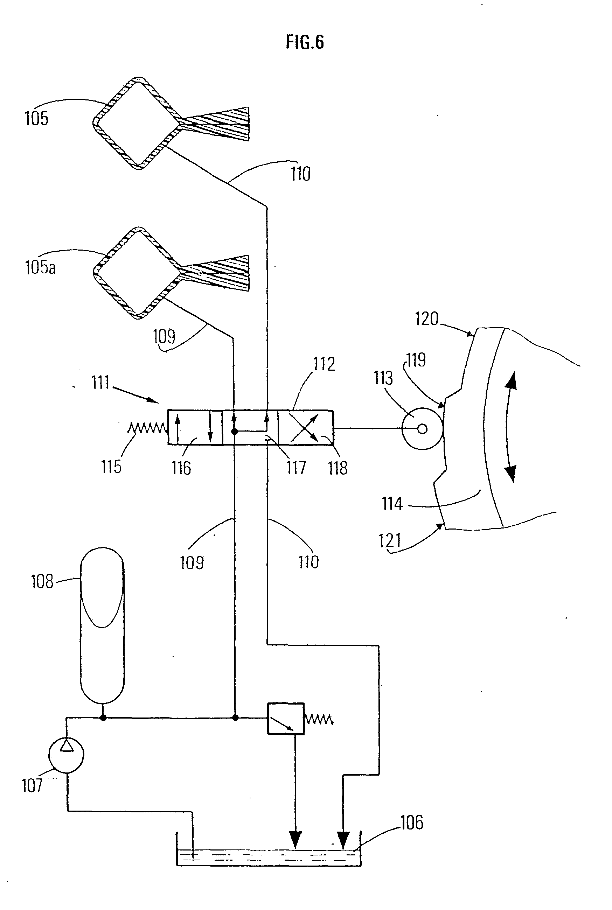

Les fig. 4 et 5 représentant une variante du système de joint gonflable utilisé, comme par exemple fig. 3, pour participer aux moyens de connexion temporaire. Ce joint gonflable 92 comporte un manchon cylindrique expansible en matériau élastiquement déformable 93, renforcé par une armature 94 en fils tressés peu extensibles, qui est ancrée solidement sur deux brides d'extrémité telles que 95. Lesdites brides sont reliées à la bride d'extrémité 96 du manchon élastiquement déformable en torsion, qui est repéré par exemple sur la fig. 3 par le repère 68 ou 68a, afin que celle-ci délimite avec le joint 92 une chambre annulaire 97, qui peut être alimentée en fluide sous pression par l'orifice 98. L'armature de renfort 94 du manchon 93 est composée de deux nappes de fils ou câblés en matériau peu extensible 99 et 99a bobinées en hélice et formant entre elles un angle ad hoc 100, voisin de 20° par exemple, tel que, lorsque la chambre 97 est alimentée en fluide sous pression, ces câbles sont mis en tension et prennent une orientation plus stable pour former entre elles un nouvel angle 101, voisin de 55° par exemple, ce qui se traduit par un accroissement du diamètre du manchon expansible 93, comme on le voit sur la fig. 5, où celui-ci se trouve de la sorte fortement pressé contre la paroi intérieure du carter 102. Par contre, comme représenté sur la fig. 4, lorsque l'alimentation en fluide sous pression est interrompue, chaque élément en matériau élastiquement déformable, tel que 103, emprisonné entre les câbles et présentant une forme de losange, qui s'était trouvé déformé sous l'effet du changement d'orientation de ces câbles, tend, par rappel élastique, à reprendre sa forme d'origine. Le rappel élastique de tous les éléments 103 a entraîné le rappel élastique de l'ensemble du manchon 93, qui est revenu à sa forme cylindrique initiale, et n'a plus aucun contact avec le carter 102. On notera que l'accroissement du diamètre du manchon 93 sous l'effet de la pression s'accompagne généralement d'une réduction de sa longueur. C'est pourquoi, dans l'exemple de réalisation représenté fig. 4 et 5, on a montré que les brides d'extrémité telles que 95 dudit manchon 93 pouvaient être liées à la bride 96 qui les supporte par l'intermédiaire de viroles, telles que 104, en matériau élastiquement déformables, sur lesquelles elles adhèrent et dont la déformabilité en cisaillement dans le sens axial tolère cette réduction de longueur.

Par ailleurs, on pourrait sans sortir du domaine de l'invention réaliser un joint gonflable qui, au lieu de s'expandre sous l'effet d'une pressurisation interne pour venir en contact avec la paroi intérieure d'un carter qui l'entoure, aurait inversement la propriété de se rétrécir sous l'effet d'une pressurisation externe pour venir en contact avec la paroi extérieure de la tuyauterie de transfert.

La Fig. 6 représente de façon schématique et simplifiée un exemple de réaliston du circuit d'alimentation en fluide sous pression des moyens de connexion précédemment décrits, où les deux organes récepteurs de ce fluide, vérins ou joints gonflables, qui actionnent ces moyens de connexion, sont symbolisés par les deux enceintes 105 et 105a.

Dans ce cas, le fluide est un liquide hydraulique qui est puisé dans la bâche 106 ouverte à l'air libre, et qui, mis en pression par la pompe 107, est stocké dans l'accumulateur oléopneumatique 108. Deux tuyauteries 109 et 110 font communiquer les deux enceintes 105 et 105a avec la pompe 107 d'une part et la bâche 106 d'autre part, par l'intermédiaire du distributeur hydraulique 111 possédant un tiroir coulissant 112 actionné par le palpeur 113 qui suit le profil à trois niveaux 119, 120 et 121 de la came 114 contre laquelle il est maintenu en contact par la poussée du ressort 115. Le tiroir 112 comprend trois tronçons, qui sont symbolisés par les trois rectangles 116, 117 et 118, dans chacun desquels deux flèches indiquent le sens du passage du fluide au travers d'orifices internes. Dans cette fig. 6, le tiroir est représenté dans sa position médiane correspondant au niveau intermédiaire 119 du profil de la came 114, et dans cette position, les enceintes 105 et 105a sont toutes les deux en communication avec la pompe 107, et alimentées en fluide sous pression. On imagine aisément, qu'à la suite d'une rotation de la came 114 par rapport au distributeur 111, le palpeur 113 puisse se trouver en face du niveau 120 du profil de cette came le plus proche de son axe de rotation, le tiroir 112 ayant coulissé de façon à mettre les orifices internes de son tronçon 116 en correspondance avec les tuyauteries 109 et 110. Dans cette position, l'enceinte 105a est en communication avec la pompe 107 et pressurisée, et l'enceinte 105 est en communication avec la bâche 106 ouverte à l'air libre et de la sorte dépressurisée. De la même façon, on imagine aisément, qu'à la suite d'une rotation dans le sens inverse de la came 114 par rapport au distributeur 111, le palpeur 113 puisse se trouver en face du niveau 121 du profil de la came le plus éloigné de son axe de rotation, le tiroir 112 ayant coulissé en sens inverse de façon à mettre les orifices internes de son tronçon 118 en correspondance avec les tuyauteries 109 et 110. Dans cette position, c'est l'enceinte 105 qui est en communication avec la pompe 107 et alimentée en fluide sous pression, et l'enceinte 105a qui est en communication avec la bâche 106 ouverte à l'air libre, et, de la sorte, dépressurisée.

L'accumulateur oléopneumatique 108 est associé à la pompe 107 afin de maintenir l'alimentation en fluide sous pression du dispositif pendant un certain temps lorsque, pour une raison quelconque, l'entraînement de ladite pompe est interrompue.

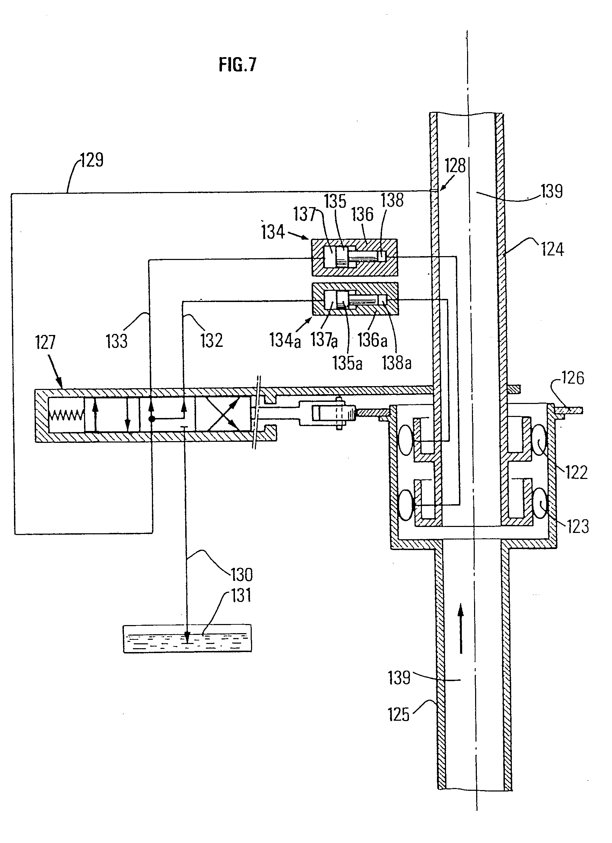

Sur la fig. 7, on a représenté de façon schématique et simplifiée une variante de réalisation du circuit d'alimentation en fluide sous pression des moyens de connexion précédemment décrits, où le fluide sous pression provient directement du conduit 139, que l'on veut confiner, constitué par les deux tuyauteries coaxiales 124 et 125 tournant l'une par rapport à l'autre. Les deux organes récepteurs de ce fluide, vérins ou joints gonflables, qui actionnent ces moyens de connexion, sont symbolisés par les deux enceintes 122 et 123. La came 126 est entraînée en rotation par la tuyauterie 125 et le distributeur 127 par la tuyauterie 124. Le prélèvement du fluide sous pression est effectué dans la tuyauterie 124 par l'orifice 128. La canalisation 129 relie cet orifice au distributeur 127, la canalisation 130 relie le distributeur à la bâche 131 ouverte à l'air libre. Les canalisations 132 et 133 relient le distributeur 127 aux deux enceintes 122 et 123 respectivement par l'intermédiaire de deux multiplicateurs de pression 134 et 134a. Chaque multiplicateur de pression 134 ou 134a comporte un piston étagé 135 (ou 135a), coulissant dans un corps étanche 136 (ou 136a) à deux alésages coaxiaux 137 et 138 (ou 137a et 138a) de sections différentes, de sorte que la pression à la sortie, côté alésage de plus petit diamètre 138 (ou 138a), est supérieure à la pression à l'entrée, côté alésage de plus grand diamètre 137 (ou 137a), et donc supérieure à la pression régnant dans le circuit 139.

Ce circuit d'alimentation fonctionne de façon identique au circuit décrit par la fig. 6, seule la source de fluide sous pression est différente. Le fluide sous pression qui provenait dans le circuit de la fig. 6 de la pompe 107, provient dans cette variante directement du conduit 139.

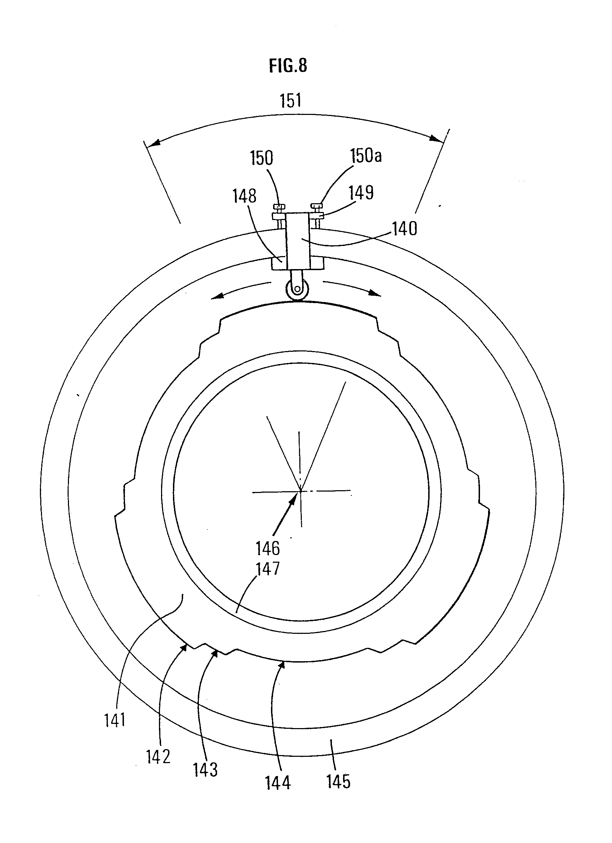

Enfin sur la fig. 8, on a représenté un mode de fixation du distributeur à tiroir 140 qui, comme dans les exemples de réalisation précédemment décrits, est associé à une came 141, dont le profil étagé comprend trois niveaux 142, 143 et 144. Chacune des trois positions du distributeur correspond à un des niveaux de la came. Le distributeur 140 est monté coulissant sur une couronne 145, solidaire en rotation de l'une des tuyauteries de transfert de fluide non représentée d'axe 146, tournant autour de cet axe par rapport à l'autre tuyauterie 147 de même axe qui porte la came 141. Le coulissement du distributeur 140 sur l'anneau 145 peut par exemple s'effectuer à l'aide des étriers de guidage 148 et 149, l'étrier 149 portant les vis de blocage 150 et 150a.

Il est intéressant, comme on le verra plus loin, de pouvoir de cette façon régler la position initiale du distributeur 140 par rapport au profil de la came 141, singulièrement lorsque la rotation, l'une par rapport à l'autre autour de l'axe 146, des deux tuyauteries de transfert de fluide, se limite à un débattement angulaire d'angle inférieur à l'angle 151, correspondant au périmètre d'un seul niveau du profil de la came tel que par exemple 142 ou 144.

Le fonctionnement du dispositif ainsi décrit est facile à comprendre. On se référera d'abord, pour décrire ce fonctionnement, aux modes de réalisation décrits fig. 3 et 6, et on verra ensuite que pour les autres modes de réalisation décrits fig. 1, 2, 4, 5 et 7, le fonctionnement est similaire.

Au cours de la rotation, l'une par rapport à l'autre autour de l'axe 64, des deux tuyauteries de transfert de fluide 62 et 63, le maintien de l'étanchéité entre ces deux tuyauteries est assuré selon un multiple de trois séquences consécutives de fonctionnement, correspondant à trois configurations du dispositif.

Comme on le voit d'abord sur la fig. 6, la première séquence correspond à une configuration du dispositif où le palpeur à galet 113 (90 sur la fig. 3) parcourt le niveau 120 de la came 114 (91 sur la fig. 3). Le tiroir 116 du distributeur est alors dans une position extrême, le ressort 115 étant détendu, où le joint gonflable 105 (79 sur la fig. 3) est en communication avec la bâche de mise à l'air libre 106, et où le joint gonflable 105a (79a sur la fig. 3) est en communication avec l'alimentation en fluide sous pression, par exemple avec la pompe 107. On voit ensuite fig. 3, qu'en conséquence, le joint 79 dépressurisé n'a aucun contact avec le carter 81 solidaire de la tuyauterie 62, et que la bride 74 qui le supporte peut librement tourner avec la tuyauterie 63. Par contre, le joint 79a, pressurisé, est fortement appliqué sur le carter 81, de sorte qu'il assure, d'une part, l'étanchéité entre ce carter et la bride 74a qui le porte, et d'autre part, l'entraînement en rotation de cette bride par ledit carter 81. Le manchon élastique 68a, dont les extrémités sont fixées sur deux brides 72a et 74a qui, entraînées par les tuyauteries 62 et 63, tournent l'une par rapport à l'autre, subit une déformation en torsion qui se trouve forcément limitée angulairement, par exemple à 20° dans les deux sens de rotation.

Lorsque la déformation en torsion du manchon 68a est proche de la limite admissible, c'est-à-dire après une torsion de 18° par exemple, le palpeur à galet 113 aborde le niveau 119 de la came 114 sur lequel il chemine ensuite au cours d'une rotation de 2° par exemple. Au cours de cette deuxième séquence de fonctionnement, le tiroir du distributeur 111 est en position médiane, et les deux joints gonflables 105 et 105a (79 et 79a sur la fig. 3) sont pressurisés simultanément. L'étanchéité est réalisée au niveau du joint gonflable 79 comme au niveau du joint gonflable 79a, et le fluide emprisonné entre ces deux joints peut être drainé par l'orifice 152, vers un circuit de récupération de fuites non représenté.

La bride 74, qui porte le joint 79, subit un début d'entraînement en rotation par le carter 81 solidaire de la tuyauterie 62, et le manchon élastique 68 subit un début de torsion, de 2° par exemple, alors que la torsion du manchon 68a atteint l'angle maxi admissible eu égard à la souplesse en cisaillement des rondelles en élastomère, telles que 70, qui le compose.

A ce moment, le palpeur à galet 113 aborde le niveau 121 de la came 114, sur lequel il chemine ensuite au cours d'une rotation de 18° par exemple. Au cours de cette troisième séquence de fonctionnement, le tiroir du distributeur 111 est dans une position extrême, opposée à la position qu'il occupait au cours de la première séquence, et dans laquelle le ressort 115 est comprimé. Dans cette configuration, le joint gonflable 105 (79 sur la fig. 3) est toujours en communication avec l'alimentation en fluide sous pression, par exemple avec la pompe 107. Par contre le joint gonflable 105a est mis en communication avec la bâche de mise à l'air libre 106. En conséquence, le joint 105a (79a sur la fig. 3) se trouve dépressurisé et n'est plus en contact avec le carter 81 solidaire de la tuyauterie 62. Grâce au rappel élastique de ses éléments en élastomère, tels que 70, le manchon élastique en torsion 68a revient à sa position initiale, et se trouve ainsi préparé à aborder une nouvelle fois la première séquence. Les trois séquences précédemment décrites peuvent se répéter autant de fois qu'il est nécessaire pour permettrre la rotation des tuyauteries 62 et 63 l'une par rapport à l'autre, en maintenant l'étanchéité par un fonctionnement pas à pas du dispositif, le confinement n'étant interrompu par l'un des deux organes similaires fonctionnant en alternance, 68 par exemple, que lorsqu'il est assuré par l'autre, 68a par exemple.

On comprend aisément que le fonctionnement soit similaire si les joints gonflables sont du type du joint 92 représenté sur les fig. 4 et 5.

De même, le fonctionnement est similaire lorsque les manchons élastiques en torsion sont réalisés comme les manchons 17 et 17a de la fig. 1 ou 39 et 39a de la fig. 2, et lorsque la connexion étanche temporaire est réalisée comme fig. 1 à l'aide de l'ensemble des moyens 16 et 16a, ou comme fig. 2 à l'aide des bagues élastiques 40 et 40a.

Le fonctionnement est également similaire, si comme dans la fig. 7, l'alimentation en fluide sous pression provient directement du conduit 139 du fluide à confiner, les multiplicateurs de pression 134 et 134a ajoutés dans le circuit ne servant qu'à élever le niveau de pression des joints gonflables à une valeur supérieure au niveau de pression régnant dans le conduit 139, pour leur permettre d'assurer l'étanchéité. Cependant, il est nécessaire d'expliquer dans ce cas que les pistons 135 et 135a de ces multiplicateurs peuvent prendre deux positions selon que la tuyauterie 133 ou 132 qui les relient au distributeur 127 est en communication avec la source de fluide sous pression par la canalisation 129, ou bien avec la bâche de mise à l'air libre 131 par la canalisation 130. Dans le premier cas, le piston 135 (ou 135a), sous l'effet de la pression du fluide s'exerçant dans l'alésage 137 (ou 137a), est poussé vers l'alésage 138 (ou 138a) dont la capacité est chassée vers le récepteur de commande des moyens de connexion temporaire 122 (ou 123). Dans le deuxième cas, le récepteur 122 (ou 123), par son rappel élastique propre, renvoie le fluide qu'il contient vers l'alésage 138 (ou 138a) pour pousser le piston 135 (ou 135a) vers l'alésage 137 (ou 137a) dont la capacité, mise à l'air libre, est chassée vers la bâche 131.

Les avantages de la présente invention résultent essentiellement de la possibilité offerte par l'utilisation de ce dispositif, de substituer aux moyens devant réaliser l'étanchéité entre deux surfaces mobiles l'une par rapport à l'autre, des moyens limités à la réalisation de l'étanchéité entre deux surfaces fixes l'une par rapport. Or, l'on sait que, dans l'état actuel de la technique, on peut aisément obtenir l'étanchéité entre surface fixes pour des pressions élevées, même si le fluide est un gaz.

Par contre, le niveau de pression atteint, la fiabilité, et l'endurance sont limitées si l'étanchéité est à réaliser entre surfaces mobiles l'une par rapport à l'autre, surtout si les mouvements de rotation sont alternatifs, et comportant ainsi de nombreuses inversions du sens de rotation.

Le dispositif de maintien de l'étanchéité selon l'invention s'applique à tous systèmes comprenant des tuyauteries à haute pression tournant lentement l'une par rapport à l'autre, et dont la majeure partie des mouvements sont des oscillations alternatives de faible amplitude, alors que les rotations de plus d'un tour sont occasionnelles. Il est particulièrement adapté à la réalisation de joints tournants utilisés, dans l'exploitation de gisements de pétroles sous-marins, pour transférer la production, qui peut être du pétrole ou du gaz, entre une installation marine fixe par rapport au fond de la mer et une installation flottante, qui peut être un navire-usine ou un navire-réservoir, et qui, sous l'action du vent, des courants, et de la houle, évite autour de l'installaton marine.

## Revendications

1. Dispositif de maintien de l'étanchéité entre deux pièces pouvant se déplacer l'une par rapport à l'autre, caractérisé en ce qu'il comporte au moins deux ensembles dits d'étanchéité (39, 40) et (39a, 40a) indépendants, chacun de ces ensembles d'étanchéité ayant au moins deux états possibles, un premier état (39, 40) pour lequel il assure l'étanchéité entre lesdites deux pièces, et un deuxième état (39a, 40a) pour lequel il n'assure pas l'étanchéité, en ce que chacun desdits ensembles d'étanchéité est déformable et en ce qu'il comporte en outre des moyens de commande actionnant par intermittence lesdits ensembles d'étanchéité.

2. Dispositif selon la revendication 1, caractérisé en ce que chacune des deux pièces (33 et 34) est une tuyauterie tournant l'une par rapport à l'autre autour d'un même axe (35).

3. Dispositif de maintien de l'étanchéité selon la revendication 2, caractérisé en ce qu'au moins un desdits ensembles d'étanchéité comporte un manchon élastiquement déformable en torsion selon son axe (39), relié de façon étanche par l'une de ses extrémités à l'une des tuyauteries précitées (33), et portant à son autre extrémité une bride (47) équipée de moyens de connexion temporaire (40) sur l'autre tuyauterie précitée (34).

4. Dispositif de maintien de l'étanchéité selon la revendication 3, caractérisé en ce que le manchon élastiquement déformable en torsion selon son axe (17) comprend au moins une virole rigide (18) reliée, d'une part, sur une partie de sa longueur, avec l'une des deux tuyauteries (1) par l'intermédiaire d'une première virole en matériau élastiquement déformable (20), dont l'une des deux surfaces latérales cylindriques adhère sur ladite tuyauterie et l'autre sur ladite virole rigide, et d'autre part, sur une autre partie de sa longueur avec la bride (11) équipée de moyens de connexion temporaire (16) par l'intermédiaire d'une seconde virole en matériau élastiquement déformable (19), dont l'une des deux surfaces latérales cylindriques adhère sur ladite bride, et l'autre sur ladite virole rigide.

5. Dispositif de maintien de l'étanchéité selon la revendication 3, caractérisé en ce que le manchon élastiquement déformable en torsion selon son axe (68) comporte un empilage de rondelles en matériau élastiquement déformable (70) et de rondelles rigides (71), chacune desdites rondelles rigides étant placée entre deux rondelles en matériau élastiquement déformables auxquelles elle adhère, la rondelle en matériau élastiquement déformable située à l'une des extrémités dudit manchon adhérant avec une bride (72) solidaire de l'une des deux tuyauteries de transfert de fluide sous pression (63), et la rondelle en matériau élastiquement déformable située à l'autre extrémité dudit manchon adhérant avec la bride (73) équipée de moyens de connexion temporaire (74) sur l'autre tuyauterie de transfert de fluide sous pression (62).

6. Dispositif de maintien de l'étanchéité selon la revendication 3, caractérisé en ce que le manchon élastiquement déformable en torsion selon son axe (39) est un tube souple en matériau élastiquement déformable (41), éventuellement renforcé par une armature (42) en fils résistants en traction, et dont l'une des extrémités comporte une bride (44) solidaire de l'une des deux tuyauteries (33) et dont l'autre extrémité comporte une autre bride (47) équipée de moyens de connexion temporaire (40) sur l'autre tuyauterie de transfert de fluide sous pression (34).

7. Dispositif de maintien de l'étanchéité selon la revendication 3, caractérisé en ce que les moyens de connexion temporaire (40) sont constitués par une bague en matériau élastiquement déformable (52) disposée autour de la tuyauterie à connecter (34) dans une gorge ménagée dans ladite bride (47, 53) d'extrémité du manchon élastiquement déformable en torsion (39), et dont l'une des parois latérales est mobile et actionnée pour un vérin hydraulique annulaire (48, 49, 54), ladite bague, qui présente une forme différente de sa forme initiale lorsqu'elle est soumise temporairement à un effort de compression selon son axe appliqué par ledit vérin annulaire, restituant cet effort radialement autour de ladite tuyauterie qu'elle enserre fortement pour réaliser simultanément, d'une part, l'étanchéité entre ledit manchon et ladite tuyauterie, et d'autre part, l'entraînement en rotation de ladite bride d'extrémité dudit manchon par ladite tuyauterie de transfert de fluide.

8. Dispositif de maintien de l'étanchéité selon la revendication 3, caractérisé en ce que les moyens de connexion temporaire (74) sont constitués par une membrane étanche et élastique (79) solidaire de la bride d'extrémité (73) du manchon élastiquement déformable en torsion (68), avec laquelle elle délimite une chambre annulaire à géométrie variable concentrique à la tuyauterie de transfert de fluide sous pression, ladite membrane pouvant prendre, selon que ladite chambre qu'elle délimite est alimentée ou non en fluide sous pression, une première position (83) où, gonflée, elle est appliquée fortement contre ladite tuyauterie (81) en réalisant, d'une part, l'étanchéité entre ledit manchon et ladite tuyauterie, et d'autre part, l'entraînement en rotation, par friction, de ladite bride d'extrémité dudit manchon par la tuyauterie précitée, et, une seconde position (83a), où, dégonflée, elle est rappelée par sa propre raideur élastique contre ladite bride dans sa forme initiale de repos, et n'a plus de contact avec la tuyauterie précitée.

9. Dispositif de maintien de l'étanchéité selon la revendication 8, caractérisé en ce que la membrane étanche et élastique (92) participant aux moyens de connexion temporaire est un tube en élastomère (93) fixé à ses deux extrémités sur la bride d'extrémité du manchon élastiquement déformable (96), avec laquelle il délimite une chambre annulaire pressurisable (97) et dont la résistance à la pression et la déformabilité élastique sont assurées par une armature interne (94) en fils tressés (99 et 99a), lesdits fils formant entre eux un angle ad hoc (100), voisin de 20°, de sorte que sous l'action de la pressurisation de ladite chambre, le diamètre dudit tube s'accroît par modification de l'angle formé entre eux par lesdits fils tressés et revient à sa côte initiale lorsque l'alimentation en fluide sous pression est stoppée, par rappel élastique de l'élastomère (103) emprisonné entre lesdits fils tressés.

10. Dispositif de maintien de l'étanchéité selon la revendication 3, caractérisé en ce que les moyens de connexion temporaire (16) comporte une collerette (7) solidaire de la tuyauterie à connecter (2) et emprisonnée dans une gorge (8) ménagée dans la bride d'extrémité (11) du manchon élastique en torsion (17), les parois latérales de ladite gorge étant constituées par le corps (9) et le piston (10) d'un vérin hydraulique annulaire, l'alimentation en fluide sous pression du cylindre dudit vérin hydraulique produisant le rapprochement desdites parois latérales, pour pincer très fortement ladite collerette, afin de réaliser, d'une part, l'étanchéité entre ledit manchon et ladite tuyauterie, et d'autre part, l'entraînement en rotation, par friction, de ladite bride d'extrémité dudit manchon par la tuyauterie précitée.

11. Dispositif de maintien de l'étanchéité selon la revendication 7 ou 10, caractérisé en ce que le vérin annulaire actionnant la paroi latérale mobile de la gorge (8) ménagée dans la bride d'extrémité (11) du manchon élastique (17) comporte un corps de vérin (9) et un piston (10) coaxiaux qui sont reliés entre eux, de part et d'autre de la chambre annulaire pressurisable (14) qu'ils confinent, par deux viroles en matériau élastiquement déformable (12 et 13), dont les surfaces latérales adhérent avec ledit corps de vérin et ledit piston, le mouvement axial dudit piston produit dans un sens sous l'effet de la pression du fluide contenu dans ladite chambre annulaire étant toléré par la déformation en cisaillement du matériau souple desdites viroles, et le mouvement en sens inverse étant obtenu, lorsque la mise en pression de ladite chambre annulaire est interrompue, par la raideur élastique du matériau souple desdites viroles qui tend à reprendre sa forme initiale.

12. Dispositif de maintien de l'étanchéité selon l'une des revendications 2 à 11, caractérisé en ce que lesdits moyens de commande sont liés à la rotation de ces deux tuyauteries l'une par rapport à l'autre à l'aide d'une came (60) solidaire de l'une des deux tuyauteries précitées (33) et d'un détecteur de position (57) associé à ladite came et fixé sur l'autre tuyauterie (34), ledit détecteur déclenchant le fonctionnement des moyens de connexion (40 et 40a) équipant lesdits ensembles d'étanchéité.

13. Dispositif de maintien de l'étanchéité selon la revendication 12, caractérisé en ce que le détecteur de position est un distributeur de fluide (111) à tiroir (112) à trois positions (116, 117, 118) sur lequel on branche quatre tuyauteries, et en ce que la came (114), à laquelle est associé un palpeur de manœuvre (113) de ce tiroir, présente un contour à trois niveaux (119, 120, 121), deux desdites tuyauteries reliant chacune ledit distributeur à chacun des moyens de connexion temporaire équipant les ensembles d'étanchéité actionnés en alternance, la troisième tuyauterie reliant ledit distributeur à un générateur de fluide sous pression (107) associé à un accumulateur de pression (108), et la quatrième tuyauterie reliant ledit distributeur à une bâche réceptrice (106) avec mise à l'air libre dans laquelle bâche le générateur précité puise le fluide qu'il met en pression, les trois positions dudit distributeur correspondant aux séquences de mise en action desdits ensembles d'étanchéité pendant lesquelles successivement un seul des deux ensembles d'étanchéité précités est en action, puis les deux, puis le second seulement, etc., chacune de ces séquences correspondant à un des trois niveaux de ladite came.

14. Dispositif de maintien de l'étanchéité selon la revendication 13, caractérisé en ce que, pour assurer l'alimentation en fluide sous pression desdits moyens de connexion temporaire (122 et 123), une canalisation (129) relie ledit distributeur à tiroir (127) au circuit (139) comportant les deux tuyauteries coaxiales de transfert de fluide tournant l'une par rapport à l'autre précitées (124 et 125), de façon à utiliser directement, pour manœuvrer cesdits moyens de connexion, l'énergie du fluide à confiner.

15. Dispositif de maintien de l'étanchéité selon la revendication 14, caractérisé en ce qu'au moins un multiplicateur de pression (134) comportant un piston étagé (135) coulissant dans un corps étanche (136) à deux alésages coaxiaux (137 et 138) est interposé sur le circuit d'alimentation en fluide sous pression desdits moyens de connexion temporaire.

16. Dispositif de maintien de l'étanchéité selon la revendication 12 ou 13, caractérisé en ce que le détecteur de position (140) est relié à celle des deux dites tuyauteries de transfert qui ne porte pas ladite came (141) par des moyens de fixation indexables en azimut (148, 149, 150, 150a) adaptés pour régler la position initiale dudit détecteur par rapport au profil de la came.

17. Méthode de mise en œuvre du dispositif selon la revendication 1, caractérisée en ce que l'on fait fonctionner par intermittence chacun desdits ensembles d'étanchéité et en ce que en permanence l'un ou l'autre de ces ensembles d'étanchéité est maintenu dans ledit premier état.

**Patentansprüche**

1. Vorrichtung zur Aufrechterhaltung der Abdichtung zwischen zwei bezüglich einander verschiebbaren Teilen, gekennzeichnet durch wenigstens zwei sog. unabhängige Dichtungsanordnungen (39, 40) und (39a, 40a), von denen jede über wenigstens zwei mögliche Zustände, einen ersten Zustand (39, 40) für die die Abdichtung zwischen diesen beiden Teilen sichergestellt ist und einen zweiten Zustand (39a, 40a) verfügt, für den die Abdichtung nicht sichergestellt ist; dass jede dieser Abdichtungsanordnungen verformbar ist und dass sie darüber hinaus über Steuereinrichtungen verfügt, welche diese Dichtungsanordnungen intermittierend betätigen.

2. Vorrichtung nach Anspruch 1, dadurch gekennzeichnet, dass jedes dieser beiden Teile (33) und (34) eine Leitung ist, wobei die eine gegenüber der anderen um ein und die gleiche Achse (35) drehbar ist.

3. Vorrichtung zur Aufrechterhaltung der Abdichtung nach Anspruch 2, dadurch gekennzeichnet, dass wenigstens eine dieser Abdichtungsanordnungen eine elastisch längs ihrer Achse (39) torsionsverformbare Muffe aufweist, die dicht über eines ihrer Enden mit einer der genannten Leitungen (33) verbunden ist und an ihrem anderen Ende einen Flansch (47) trägt, der mit Einrichtungen zur zeitweisen Verbindung (40) an die andere genannte Leitung (34) ausgestattet ist.

4. Vorrichtung zur Aufrechterhaltung der Abdichtung nach Anspruch 3, dadurch gekennzeichnet, dass die elastisch längs ihrer Achse (17) torsionsverformbare Muffe wenigstens einen steifen Ring (18) umfasst, der einerseits auf einem Teil seiner Länge mit einer der Leitungen (1) vermittels eines ersten Rings aus elastisch verformbarem Material (20) verbunden ist, dessen eine seiner beiden seitlichen zylindrischen Flächen auf dieser Leitung und die andere auf diesem steifen Ring haftet und andererseits auf einem anderen Teil seiner Länge mit dem Flansch (11) verbunden ist, der mit Einrichtungen zur zeitweisen Verbindung (16) vermittels eines zweiten Rings aus einem elastisch verformbaren Material (19) ausgestattet ist, von dem eine der beiden seitlichen zylindrischen Flächen auf diesem Flansch, die andere auf diesem steifen Ring, haftet.

5. Vorrichtung zur Aufrechterhaltung der Abdichtung nach Anspruch 3, dadurch gekennzeichnet, dass die elastisch längs ihrer Achse (68) torsionsverformbare Muffe einen Stapel von Unterlegscheiben aus elastisch verformbarem Material (70) und steifen Unterlegscheiben (71) umfasst, wobei jede dieser steifen (Ring)unterlegscheiben zwischen zwei Unterlegscheiben aus elastisch verformbarem Material, an denen sie haftet, angeordnet ist, wobei die Unterlegscheibe aus elastisch verformbarem Material, die an einem der Enden dieser Muffe angeordnet ist, mit einem Flansch (72) haftet, der fest bezüglich einer der beiden Druckfluidtransportleitungen (63) ist und die Unterlegscheibe aus elastisch verformbarem Material, die am anderen Ende dieser am Flansch (73) haftenden Muffe angeordnet ist, mit Einrichtungen zur zeitweisen Verbindung (74) an der anderen Druckfluidtransportleitung (62) angeordnet ist.

6. Vorrichtung zur Aufrechterhaltung der Abdichtung nach Anspruch 3, dadurch gekennzeichnet, dass die um ihre Achse (39) elastisch torsionsverformbare Muffe ein nachgiebiges Rohr aus einem elastisch verformbaren Material (41) ist, das gegebenenfalls vermittels einer Verstärkung (42) aus zugbeständigen Drähten verstärkt ist und wobei eines der Enden einen Flansch (44) umfasst, der bezüglich einer der beiden Leitungen (33) fest ist und wobei das andere Ende einen anderen Flansch (47) umfasst, der mit Einrichtungen (40) zur zeitweisen Verbindung an der anderen Druckfluidtransportleitung (34) ausgestattet ist.

7. Vorrichtung zur Aufrechterhaltung der Abdichtung nach Anspruch 3, dadurch gekennzeichnet, dass die Einrichtungen (40) zur zeitweisen Verbindung gebildet werden durch einen Ring aus elastisch verformbarem Material (52), der um die zu verbindende Leitung (34) in einer Nut angeordnet ist, die in diesem Endflansch (47, 53) der elastisch torsionsverformbaren Muffe (39) eingebracht ist und von dem eine der seitlichen Wandungen beweglich und durch einen hydraulischen ringförmigen Stellzylinder (48, 49, 54) betätigbar ist, wobei diese Ringscheibe, die eine Form unterschiedlich zu ihrer Ausgangsform aufweist, wenn sie zeitweise einer Kompressionskraft längs einer Achse ausgesetzt ist, wenn sie von diesem Ringstellzylinder beaufschlagt ist, diese Beanspruchung radial um diese Leitung, die sie fest umschliesst, zurückstellt, um gleichzeitig einerseits die Abdichtung zwischen dieser Muffe und dieser Leitung und andererseits die Drehmitnahme dieses Endflansches dieser Muffe durch diese Fluidtransportleitung herbeizuführen.

8. Vorrichtung zur Aufrechterhaltung der Abdichtung nach Anspruch 3, dadurch gekennzeichnet, dass diese Einrichtungen (74) zur zeitweisen Verbindung gebildet werden durch eine dichte und elastische Membran (79), die fest mit dem Endflansch (73) der torsionselastisch verformbaren Muffe (68) ist, mit der sie eine Ringkammer variabler Geometrie konzentrisch zur Druckfluidtransportleitung begrenzt, wobei diese Membran, je nachdem, ob die Kammer, die sie begrenzt, gegebenenfalls mit Fluid unter Druck gespeist ist, eine erste Stellung (83) oder geblähte Stellung einnehmen kann, in der sie stark gegen diese Leitung (81) gepresst wird, indem sie einerseits die Abdichtung zwischen dieser Muffe und dieser Leitung und andererseits die Drehmitnahme durch Reibung dieses Endflansches dieser Muffe durch die genannte Leitung herbeiführt und eine zweite Stellung (83a) einnehmen kann, in der sie, entbläht, durch ihre elastische Eigensteife gegen diesen Flansch in die Ausgangsruheform rückgestellt wird und keinen Kontakt mit der genannten Leitung mehr hat.

9. Vorrichtung zur Aufrechterhaltung der Abdichtung nach Anspruch 8, dadurch gekennzeichnet, dass die dichte und elastische Membran (92), die Teil der Einrichtungen zur zeitweisen Verbindung bildet, ein Rohr aus Elastomer (83) ist, das an seinen beiden Enden am Endflansch der elastisch verformbaren Muffe (96) befestigt ist, mit der sie eine unterdrucksetzbare Ringkammer (97) begrenzt, deren Widerstand gegen Druck und elastische Verformbarkeit sichergestellt sind durch eine Innenbewehrung (94) aus Litzendrähten (99 und 99a), wobei diese Drähte untereinander einen ad hoc-Winkel (100) benachbart 20° bilden, derart, dass unter der Wirkung des Druckaufbaus dieser Kammer der Durchmesser dieses Rohres durch Modifikation des Winkels zunimmt, der zwischen ihnen durch diese Litzendrähte geformt wird und in seiner Ausgangskote zurückkehrt, wenn die Druckfluidspeisung unterbrochen wird, indem elastisch das Elastomer (103) rückgestellt wird, das zwischen den Litzendrähten eingeschlossen war.

10. Vorrichtung zur Aufrechterhaltung der Abdichtung nach Anspruch 3, dadurch gekennzeichnet, dass die Einrichtungen (16) zur zeitweisen Verbindung einen bezüglich der zu verbindenden Leitung (2) festen kleinen Bund (7) aufweisen, der in einer Nut (8) eingeschlossen ist, die in dem Endflansch (11) der torsionselastischen Muffe (17) untergebracht ist, wobei die seitlichen Wandungen dieser Nut gebildet sind durch das Gehäuse (9) und den Kolben (10) eines hydraulischen Ringstellzylinders und die Druckfluidspeisung des Zylinders des hydraulischen Stellzylinders die Annäherung dieser seitlichen Wandungen herbeiführt, um sehr stark diesen Bund zangenartig zu quetschen, um einerseits die Abdichtung zwischen der Muffe und der Leitung und andererseits die Drehmitnahme durch Reibung dieses Endflansches dieser Muffe durch die genannte Leitung herbeizuführen.

11. Vorrichtung zur Aufrechterhaltung der Abdichtung nach Anspruch 7 oder 10, dadurch gekennzeichnet, dass der die bewegliche Seitenwandung der Nut (8) betätigende Ringstellzylinder, der im Endflansch (11) der elastischen Muffe (17) untergebracht ist, ein Stellzylindergehäuse (9) sowie einen hierzu koaxialen Kolben (10) umfasst, die miteinander zu beiden Seiten der unter Druck setzbaren Ringkammer (14) verbunden sind, die sie begrenzen, und zwar vermittels zweier Ring(zwingen) aus elastisch verformbarem Material (12 und 16), deren seitliche Flächen an diesem Stellzylindergehäuse und diesem Kolben haften, wobei die in einer Richtung erzeugte Axialbewegung des Kolbens unter dem Einfluss des in dieser Ringkammer enthaltenen Fluids durch die Scherverformung des nachgiebigen Materials dieser Ring(zwingen) tolerierbar ist und die Bewegung in entgegengesetzter Richtung erhalten wird, wenn das Unterdrucksetzen dieser Ringkammer durch die elastische Steifigkeit des nachgiebigen Materials dieser Ring(zwingen) erhalten wird, das versucht, ihre Ausgangsform wieder zu gewinnen.

12. Vorrichtung zur Aufrechterhaltung der Abdichtung nach einem der Ansprüche 2 bis 11, dadurch gekennzeichnet, dass diese Steuereinrichtungen mit der Drehung bzw. Rotation dieser beiden Leitungen bezüglich einander mit Hilfe einer Nocke (60) verbunden sind, die fest an einer der beiden genannten Leitungen (33) und vermittels eines Positionsdetektors (57) verknüpft sind, der diese Nocke zugeordnet ist und an der anderen Leitung (34) befestigt ist, wobei der Detektor die Funktion der die beiden Abdichtungsanordnungen ausstattenden Verbindungseinrichtungen (40 und 40a) auslöst.

13. Vorrichtung zur Aufrechterhaltung der Abdichtung nach Anspruch 12, dadurch gekennzeichnet, dass der Positionsdetektor ein Fluidverteiler (111) mit Dreiwege- (116, 117, 118) Schieber (112) ist, an dem vier Leitungen anschliessbar sind und dass die Nocke (114), der ein Betätigungstaster (113) dieses Schiebers zugeordnet ist, eine Kontur mit drei Niveaus (119, 120, 121) aufweist, dass zwei dieser Leitungen je diesen Verteiler mit jeder der Einrichtungen zur zeitweisen Verbindung verbinden, welche die Abdichtungsanordnungen ausstatten und abwechselnd betätigbar sind, wobei die dritte Leitung diesen Verteiler mit einem Druckfluiderzeuger (107) verbindet, der einem Drucksammler (108) zugeordnet ist und dass die vierte Leitung diesen Verteiler mit einer Aufnehmerwanne (106) verbindet, die der Umgebungsluft ausgesetzt ist, in welcher Wanne der Druckfluiderzeuger das Fluid, das er unter Druck setzt, ansaugt und die drei Stellungen dieses Verteilers den Sequenzen der Einschaltung dieser Abdichtungseinrichtungen entsprechen, während denen aufeinanderfolgend eine einzige dieser genannten Abdichtungsanordnungen, dann die beiden, dann nur die zweite etc. in Aktion ist, wobei jede dieser Sequenzen einem der drei Niveaus dieser Nocke entspricht.

14. Vorrichtung zur Aufrechterhaltung der Abdichtung nach Anspruch 13, dadurch gekennzeichnet, dass zur Sicherung der Druckfluidspeisung dieser Einrichtungen (122 und 123) zur zeitweisen Verbindung eine Leitung (129) diesen Verteilerschieber (127) mit dem Kreis (139) verbindet, der die beiden koaxialen Fluidtransportleitungen umfasst, die bezüglich einander sich drehen (124 und 125) derart, dass direkt zur Betätigung dieser Verbindungseinrichtungen die Energie des einzugrenzenden Fluids ausgenützt wird.

15. Vorrichtung zur Aufrechterhaltung der Abdichtung nach Anspruch 14, dadurch gekennzeichnet, dass wenigstens ein Druckübersetzer (134) mit einem Stufenkolben (135) in einem dichten Gehäuse (136) mit zwei Koaxialbohrungen (137 und 138) gleitet und in den Druckfluidspeisekreis dieser Einrichtungen zur zeitweisen Verbindung zwischengeschaltet ist.

16. Vorrichtung zur Aufrechterhaltung der Abdichtung nach Anspruch 12 oder 13, dadurch gekennzeichnet, dass der Positionsdetektor (140) mit derjenigen der beiden Transportleitungen verbunden ist, die die Nocke (141) durch im Azimut einstellbare Befestigungseinrichtungen (148, 149, 150, 150a) nicht trägt, die so ausgelegt sind, dass sie die Ausgangsstellung des Detektors bezüglich des Profils der Nocke regeln.

17. Verfahren zum Einsatz der Vorrichtung nach Anspruch 1, dadurch gekennzeichnet, dass man intermittierend jede dieser Abdichtungsanordnungen arbeiten lässt und dass dauernd die eine oder andere dieser Abdichtungsanordnungen in diesem ersten Zustand gehalten wird.

**Claims**

1. A device for maintaining the seal between two parts capable of moving in relation to one another, characterised in that it comprises at least two independent so-called sealing assemblies (39, 40) and (39a, 40a), each of these sealing assemblies having at least two possible states, a first state (39, 40) in which it provides the seal between said two parts, and a second state (39a, 40a) in which it does not provide the seal, in that each of said sealing assemblies is deformable and in that it additionally comprises control means operating said sealing assemblies intermittently.

2. A device as in claim 1, characterised in that in each of the two parts (33 and 34) is a pipe turning in relation to the other about the same axis (35).

3. A device for maintaining the seal as in claim 2, characterised in that at least one of said sealing assemblies comprises a sleeve which is elastically deformable by torsion along its axis (39), connected sealingly by one of its ends to one of the pipes mentioned previously (33) and at its other end carries a flange (47) fitted with means (40) for temporary connection to the other pipe mentioned previously (34).

4. A device for maintaining the seal as in claim 3, characterised in that the sleeve which is elastically deformable by torsion along its axis (17) comprises at least one rigid band (18) connected firstly over part of its length to one of the two pipes (1) through the intermediary of a first band made of elastically deformable material (20) one of the two cylindrical lateral surfaces of which adheres to said pipe and the other to said rigid band, and secondly over another part of its length to the flange (11) equipped with means for temporary connection (16) through the intermediary of a second band made of elastically deformable material (19) one of the two cylindrical lateral surfaces of which adheres to said flange and the other to said rigid band.

5. A device for maintaining the seal as in claim 3, characterised in that the sleeve which is elastically deformable by torsion along its axis (68) comprises a stack of washers made of elastically deformable material (70) and rigid washers (71), each of said rigid washers being placed between two washers made of elastically deformable material to which it adheres, the washer made of elastically deformable material located at one of the ends of said sleeve adhering to a flange (72) locked to one of the two pipes for transferring fluid under pressure (63), and the washer made of elastically deformable material located at the other end of said sleeve adhering to the flange (73) equipped with means for temporary connection (74) to the other pipe for transferring fluid under pressure (62).

6. A device for maintaining the seal as in claim 3, characterised in that the sleeve which is elastically deformable by torsion along its axis (39) is a flexible tube made of elastically deformable material (41), possibly strengthened by a reinforcement (42) made of threads with tensile strength, and one of the ends of which comprises a flange (44) locked to one of the two pipes (33) and the other end of which comprises another flange (47) equipped with means for temporary connection (40) to the other pipe for transferring fluid under pressure (34).

7. A device for maintaining the seal as in claim 3, characterised in that the means for temporary connection (40) are constituted by a ring made of elastically deformable material (52) disposed around the pipe (34) to be connected in a groove formed in said flange (47, 53) at the end of the sleeve which is elastically deformable by torsion (39) and one of the lateral walls of which is mobile and operated by an annular hydraulic jack (48, 49, 54), said ring, which exhibits a different shape to its initial shape when it is temporarily subjected to a compression force applied along its axis by said annular jack, returning this force radially around said pipe which it grips tightly to simultaneously produce, firstly, the seal between said sleeve and said pipe and, secondly, the rotational entrainment of said flange at the end of said sleeve by said pipe for transferring fluid.

8. A device for maintaining the seal as in claim 3, characterised in that the means for temporary connection (74) are constituted by a sealed and elastic diaphragm (79) locked to the flange (73) at the end of the sleeve which is elastically deformable by torsion (68), with which it delimits an annular chamber with a variable geometry concentric with the pipe for transferring fluid under pressure, said diaphragm being capable of adopting, depending on whether said chamber which it delimits is supplied with fluid under pressure or not, a first position (83) in which it is inflated and pressed firmly against said pipe (81) producing, firstly, the seal between said sleeve and said pipe and, secondly, the rotational entrainment by friction of said flange at the end of said sleeve by the pipe previously mentioned, and a second position (83a) in which it is deflated and returned by its own elastic rigidity against said flange to its initial resting shape and no longer makes contact with the pipe mentioned previously.

9. A device for maintaining the seal as in claim 8, characterised in that the sealed and elastic diaphragm (92) of the means for temporary connection is a tube made of elastomer (93) fixed at its two ends to the flange at the end of the elastically deformable sleeve (96) with which it delimits a pressurisable annular chamber (97) and the compression strength and elastic deformability of which are provided by an internal reinforcement (94) made of braided threads (99 and 99a), said threads forming between them and ad hoc angle (100) in the neighbourhood of 20° so that under the action of the pressurization of said chamber the diameter of said tube increases by modification of the angle formed between them by said braided threads and returns to its initial size when the supply of fluid under pressure is stopped by the resilience of the elastomer (103) trapped between said braided threads.

10. A device for maintaining the seal as in claim 3, characterised in that the means for temporary connection (16) comprise a collar (7) locked to the pipe to be connected (2) and trapped in a groove (8) formed in the flange (11) at the end of the sleeve which is elastically deformable by torsion (17), the lateral walls of said groove being constituted by the body (9) and piston (10) of an annular hydraulic jack, the supply of fluid under pressure to the cylinder of said hydraulic jack moving said lateral walls together to grip said collar very tightly in order to produce, firstly, the seal between said sleeve and said pipe and, secondly, the rotational entrainment by friction of said flange at the end of said sleeve by the pipe mentioned previously.

11. A device for maintaining the seal as in claim 7 or 10, characterised in that the annular jack operating the mobile lateral wall of the groove (8) formed in the flange (11) at the end of the elastic sleeve (17) comprises a jack body (9) and a piston (10) which are coaxial and connected together on either side of the pressurisable annular chamber (14) which they bound by two bands made of elastically deformable material (12 and 13) the lateral surfaces of which adhere to said jack body and said piston, the axial movement of said piston produced in one direction under the influence of the pressure of the fluid contained in said annular chamber being tolerated by the shear deformation of the flexible material of said bands, and the movement in the opposite direction being obtained when the pressurization of said annular chamber is interrupted through the elastic rigidity of the flexible material of said bands which tends to return to its initial shape.

12. A device for maintaining the seal as in one of claims 2 to 11, characterised in that said control means are connected to the rotation of these two pipes in relation to one another with the aid of a cam (60) locked to one of the two pipes mentioned previously (33) and a position detector (57) associated with said cam and fixed to the other pipe (34), said detector tripping the operation of the connecting means (40 and 40a) fitted to said sealing assemblies.

13. A device for maintaining the seal as in claim 12, characterised in that the position detector is a fluid distributor (111) with a slide (112) with three positions (116, 117, 118) to which four pipes are connected, and in that the cam (114) with an associated follower (113) to operate this slide exhibits a contour with three levels (119, 120, 121), two of said pipes each connecting said distributor to each of the means for temporary connection fitted to the sealing assemblies operated alternately, the third pipe connecting said distributor to a means generating fluid under pressure (107) associated with a pressure accumulator (108), and the fourth pipe connecting said distributor to a receiving tank (106) vented to the open air and from which tank the generating means mentioned above draws the fluid which it pressurises, the three positions of said distributor corresponding to the activating sequences of said sealing assemblies during which successively just one of the two sealing assemblies mentioned above is in action, then the two, then the second on its own, and so on, each of these sequences corresponding to one of the three levels of said cam.

14. A device for maintaining the seal as in claim 13, characterised in that to ensure the supply of fluid under pressure to said means for temporary connection (122 and 123) a line (129) connects said distributor with the slide (127) to the circuit (139) comprising the two coaxial pipes for transferring fluid turning in relation to one another mentioned previously (124 and 125) so as to make direct use of the energy of the fluid to be confined to operate these connecting means.

15. A device for maintaining the seal as in claim 14, characterised in that at least one pressure multiplier (134) comprising a staged piston (135) sliding in a sealed body (136) with two coaxial bores (137 and 138) is interposed in the circuit supplying fluid under pressure to said means of temporary connection.

16. A device for maintaining the seal as in claim 12 or 13, characterised in that the position detector (140) is connected to the one of the two so-called transfer pipes which does not bear said cam (141) by indexable fixing means (148, 149, 150, 150a) adapted to adjust the initial position of said detector in relation to the profile of the cam.

17. A method for implementing the device as in claim 1, characterised in that each of said sealing assemblies is operated intermittently and in that one or other of the sealing assemblies is maintained in said first state continually.

FIG.1

FIG.2

FIG.3

## FIG.4

## FIG.5

21

FIG.6

## FIG.7

## FIG.8